Europäisches Patentamt

European Patent Office

Office européen des brevets

(19)

(11) Numéro de publication : **0 329 545 B1**

## (12) FASCICULE DE BREVET EUROPEEN

(45) Date de publication du fascicule du brevet :
21.11.91 Bulletin 91/47

(51) Int. Cl.⁵ : **G06F 11/10**

(21) Numéro de dépôt : **89400406.8**

(22) Date de dépôt : **14.02.89**

(54) **Dispositif pour le calcul des bits de parité d'une somme de deux nombres.**

(30) Priorité : 18.02.88 FR 8801910

(43) Date de publication de la demande :
23.08.89 Bulletin 89/34

(45) Mention de la délivrance du brevet :
21.11.91 Bulletin 91/47

(84) Etats contractants désignés :
DE FR GB NL

(56) Documents cités :
EP-A- 0 193 711
US-A- 4 224 680
IBM TECHNICAL DISCLOSURE BULLETIN,
vol. 23, no. 12, mai 1981, pages 5498-5502, IBM
Corp., New York, US; P. KALANDRA et al.:
"Parity predict of a sum"

(73) Titulaire : **BULL S.A.**
**121, Avenue de Malakoff**
**F-75116 Paris (FR)**

(72) Inventeur : **Greiner, Alain**
**25, avenue de la Grande Armée**
**F-75016 Paris (FR)**
Inventeur : **Sun, Xiaowei**
**25, avenue de la Grande Armée**
**F-75016 Paris (FR)**
Inventeur : **Thill, Michel**
**25, avenue de la Grande Armée**
**F-75016 Paris (FR)**

(74) Mandataire : **Fournier, Michel Robert Marie et al**
**Bull S.A. Industrial Property Department P.C. :**
**HQ 8M006 BP 193.16 121 avenue de Malakoff**
**F-75764 Paris Cédex 16 (FR)**

**Description**

L'invention se situe dans le domaine des additionneurs utilisés notamment dans les processeurs des ordinateurs.

L'invention concerne plus particulièrement des circuits servant à calculer les bits de parité associés au nombre binaire qui est le résultat d'une addition calculée par un additionneur recevant en entrée deux nombres binaires.

D'une façon générale, les bits de parité associés à des mots ou des nombres binaires sont utilisés pour pouvoir détecter si ces mots ou ces nombres n'ont pas été entachés d'erreurs après avoir subi des manipulations dans les circuits de traitement.

Le bit de parité d'un groupe de bits est habituellement défini comme le résultat de la combinaison par des opérations "OU EXCLUSIF" portant sur l'ensemble des bits constituant le groupe. Le bit de parité prend donc la valeur "1" si le nombre de "1" contenus dans le groupe est impair. Ainsi, lorsqu'un seul bit ou un nombre impair de bits du groupe sont erronés, le bit de parité prend la valeur complémentaire de la valeur qu'il devrait avoir. Les erreurs peuvent donc être détectées par simple comparaison entre la parité réelle calculée à partie du groupe et la parité attendue correspondant à la valeur du bit de parité. De plus, les mots peuvent être formés de plusieurs groupes de bits et à chaque groupe on associe un bit de parité. Un mot peut donc être associé à plusieurs bits de parité.

Lorsque des opérations portant sur un ou plusieurs mots sont effectuées, il convient que le résultat de cette opération soit aussi associé à un ou plusieurs bits de parité. C'est le cas en particulier pour les opérations d'addition.

Le ou les bits de parité du résultat d'une addition pourraient être calculés directement à partir du résultat. Toutefois, avec cette solution, les bits de parité du résultat ne peuvent être obtenus que bien après le résultat lui-même, ce qui retarde le moment où le résultat et ses bits de parité associés peuvent être utilisés dans la suite du traitement.

Par ailleurs, il est souhaitable que les bits de parité puissent être calculés indépendamment du résultat proprement dit car on dispose alors d'un contrôle sur l'exactitude de l'addition.

Le problème de prédiction des bits de parité d'une somme est abordé dans de nombreux articles qui donnent des solutions dans des cas particuliers. Cet état de la technique est par exemple illustré par la publication IBM (T) Technical Disclosure Bulletin, Volume 23, numéro 12, mai 1981, pages 5498 à 5502.

De même, le brevet US 4224680 intitulé "Parity prediction circuit for adder/counter" propose une réalisation adaptée aux compteurs et aux additionneurs à propagation de retenue. Le circuit proposé utilise une pluralité d'étages PP0 à PPn montés en cascade, 0 et n étant respectivement le poids fort et le poids faible. Chaque étage fournit les bits de transmission $x_i$ et $y_i$ tels que :

$x_i = (p_i \cdot x_{i-1})^*$,
$Y_i = Y_{i-1} \overline{\oplus} (g_i \cdot x_{i-1})^*$,
où
$p_i = a_i \oplus b_i$,
$gi = a_i \cdot b_i$, $a_i$ et $b_i$ étant les bits de opérandes,

$\oplus$ est l'opération "OU EXCLUSIF",
$\overline{\oplus}$ est l'opération complémentaire de $\oplus$, le symbole * indiquant l'opération "complémentation".

Le bit de parité de la somme est ensuite obtenu par un étage de sortie PPout effectuant une opération logique sur $x_n$, $y_n$, CIN, Pa, Pb, où CIN est la retenue d'entrée et Pa et Pb sont les parités des opérandes.

Cette solution n'est cependant pas satisfaisante en combinaison avec les additionneurs plus rapides que ceux à propagation de retenue car le bit de parité serait obtenu bien après le résultat de l'addition, ce qui retarderait l'instant où le résultat final de l'addition, bit de parité compris, serait disponible pour la suite du traitement.

Ainsi, lorsque les mots pour lesquels on veut calculer le ou les bits de parité comprennent un grand nombre de bits, tous ces dispositifs connus ne permettent pas un calcul rapide dans tous les cas.

L'invention a pour but de permettre le calcul des bits de parité de la somme de deux nombres dans un temps le plus court possible, en particulier afin de ne pas retarder le moment où l'additionneur redevient disponible pour l'opération suivante. Il en résulte que l'unité de calcul pourra travailler à une fréquence supérieure.

Nous verrons ultérieurement que la rapidité du calcul des bits de parité d'une somme est conditionnée par la rapidité du calcul des bits de parité associés au mot qui est formé par les bits de retenue apparaissant au cours de l'addition. Ce mot sera désigné par la suite par "mot de retenue".

Lorsque les nombres à additionner comportent un nombre important de bits, il est plus avantageux de considérer ce mot comme la concaténation de plusieurs groupes de bits et d'associer à chacun de ces groupes un bit de parité. Par exemple, à un mot de 64 bits on peut associer huit bits de parité, chaque bit de parité étant associé à un groupe de huit bits du mot. Cette méthode permet notamment d'améliorer la détection des erreurs en particulier dans les cas d'erreurs multiples portant sur des groupes différents.

Par définition, le bit de parité associés à un groupe extrait du mot de retenue dépend en principe de tous les bits de retenue formés lors de l'addition.

Le problème du calcul des bits de retenue s'était déjà posé pour réaliser les additionneurs. Il s'avère en effet qu'un bit de retenue est obtenu d'autant plus tard que son poids est plus élevé. C'est pourquoi dans les additionneurs, on essaie de réaliser des circuits d'anticipation de retenues pour calculer ces bits de retenue le plus rapidement possible.

Cependant, même en utilisant des circuits performants, les retenues de poids fort sont toujours obtenues presque à la fin de l'opération d'addition.

Ainsi, l'invention concerne une solution pour calculer les bits de parité associés aux groupes formant le mot de retenue selon laquelle une fois le calcul des bits de retenue effectué, le temps ensuite nécessaire pour calculer les bits de parité est réduit au maximum. Ce résultat est rendu possible par le fait que le dispositif selon l'invention effectue ce calcul en deux étapes :

— une première étape qui utilise comme variables d'entrée des variables qui dépendent uniquement des nombres à additionner ;

— une deuxième étape rapide faisant intervenir des bits de retenue.

La première étape a lieu pendant le calcul des retenues par le circuit d'anticipation de l'additionneur et, compte-tenu de la lenteur relative de ce calcul, cette première étape est conçue de façon à effectuer le maximum de calculs préparatoires, permettant ainsi de simplifier la deuxième étape rendue par conséquent plus rapide.

Plus précisément, l'invention a pour objet un dispositif de calcul du bit de parité associé à au moins un groupe de m bits consécutifs extraits du mot de retenue apparaissant lors de l'addition de deux nombres binaires, lesdits nombres comprenant chacun au moins un groupe de m bits, lesdits groupes appartenant respectivement auxdits nombres et au mot de retenue étant constitués de bits respectivement de même poids, lesdits groupes extraits desdits nombres étant formés respectivement des bits $a_m$, ..., $a_i$, ..., $a_2$, $a_1$ et des bits $b_m$, ..., $b_i$..., $b_2$, $b_1$, l'indice i indiquant le poids dans le groupe du bit associé, ledit dispositif étant caractérisé en ce qu'il comprend :

— un premier étage pour calculer pour tout i compris entre 2 et m − 1 les valeurs :

$p_i = a_i \oplus b_i$

$g_i = a_i \cdot b_i$

$\oplus$ désignant l'opération "OU EXCLUSIF",

— un premier opérateur pour calculer pour tout i compris entre 2 et m − 1 les valeurs $P_i$ et les valeurs $G_i$ vérifiant les équations logiques récurrentes suivantes :

$$P_i = p_i \cdot P_{i-1} \qquad \text{avec } P_1 = p_1$$
$$G_i = g_i + p_i \cdot G_{i-1} \qquad G_1 = g_1$$

— un deuxième opérateur pour calculer :

$Y = G_1 \oplus G_2 \oplus ... \oplus G_i \oplus ... \oplus G_{m-1}$

$X = P_1 \oplus P_2 \oplus ... \oplus P_i \oplus ... \oplus P_{m-1}$

— et un troisième opérateur pour calculer :

$PC = Y \oplus c_{in} \cdot X^*$

où $c_{in}$ est la retenue de plus faible poids du groupe et où $X^*$ est le complément de X.

Le dispositif précédent peut ensuite être modifié de façon à faire intervenir des bits de parité de chacun des opérandes pour fournir directement les bits de parité associés à leur somme, sans pour cela retarder le calcul.

L'invention a donc également pour objet un dispositif de calcul du bit de parité associé à au moins un groupe de m bits extraits de la somme de deux nombres caractérisé en ce qu'il comprend un dispositif de calcul selon le dispositif précédent mais auquel sont ajoutés des circuits supplémentaires "OU EXCLUSIF" pour introduire les parités PA et PB desdits nombres et disposés de façon à :

— soit remplacer l'une quelconque des sorties $G_i$ du premier opérateur par le résultat de l'opération $PA \oplus PB \oplus G_i$ réalisée grâce auxdits circuits supplémentaires,

— soit remplacer deux sorties quelconques $G_i$ et $G_j$ du premier opérateur par, respectivement, le résultat des opérations $PA \oplus G_i$ et $PB \oplus G_j$.

D'autres caractéristiques et avantages apparaîtront dans les modes de réalisation préférentiels qui vont être décrits.

—— La figure 1 représente un schéma d'ensemble comprenant un additionneur et un dispositif selon l'invention.

—— la figure 2 représente un dispositif de calcul de bit de parité associés à un groupe de huit bits extrait du mot de retenue.

—— La figure 3 représente un dispositif de calcul du bit de parité associé à un groupe de huit bits extrait d'une somme de deux nombres binaires.

—— la figure 4 représente un exemple de réalisation d'additionneur coopérant avec le dispositif selon l'invention.

—— La figure 5 représente un circuit d'anticipation des bits de retenue selon un mode de réalisation particulier de l'invention.

—— Les figures 6 et 7 montrent des schémas de réalisation de modules logiques pouvant être utilisés dans le dispositif selon l'invention.

—— La figure 8 montre le schéma d'un autre module logique pouvant être utilisé dans le dispositif selon l'invention.

Avant de décrire l'invention en référence aux figures, il convient d'indiquer les bases théoriques de l'invention.

Si nous considérons deux nombres A et B de N bits, constitués respectivement des bits $a_N$, $a_{N-1}$, ..., $a_i$, ..., $a_2$, $a_1$ et $b_N$, $b_{N-1}$, ..., $b_i$, ..., $b_2$, $b_1$, une méthode courante pour effectuer la somme de ces deux nombres consiste à utiliser un circuit d'anticipation du mot de retenue C formé des bits de retenue $c_i$ intervenant dans l'addition.

Les additionneurs classiques de ce type comprennent un premier étage qui forme des variables intermédiaires $p_i$ et $g_i$ calculées à partir des bits $a_i$, $b_i$ des deux nombres A et B selon les équations suivantes :

$p_i = a_i \oplus b_i$

$g_i = a_i \cdot b_i$

$\oplus$ désignant l'opération "OU EXCLUSIF"

Si l'on suppose connue la retenue $c_i$ de poids i, le bit $s_i$ de poids i de la somme est obtenue par l'équation:

$s_i = p_i \oplus c_i$

D'autre part, on a :

$c_i = g_{i-1} \oplus p_{i-1} \cdot c_{i-1}$

Ainsi les bits de retenue peuvent être calculés de proche en proche à partir des variables $p_i$, $g_i$ qui dépendent des seuls bits $a_i$, $b_i$ des opérandes. Ce calcul est effectué par le circuit d'anticipation des retenues mentionné précédemment. L'additionneur comporte alors un dernier étage de calcul des bits $s_i$ de la somme S obtenus par la formule $s_i = p_i \oplus c_i$.

Considérons maintenant des groupes formés de bits consécutifs extraits des nombres A, B et C et constitués respectivement des bits $a_i$, $b_i$ et $c_i$, où i indique le poids dans le groupe du bit associé. En désignant par $c_q$ le bit de retenue de plus faible poids que l'on trouve dans l'un des groupes considérés, on peut démontrer qu'on a pour i supérieur à q :

$c_{i+1} = G_i + P_i \cdot c_q$

où $P_i$ et $G_i$ sont définis par les formules récurrentes suivantes :

$$P_i = p_i \cdot P_{i-1} \qquad \text{avec } P_q = p_q$$
$$G_i = g_i + p_i \cdot G_{i-1} \qquad G_q = g_q$$

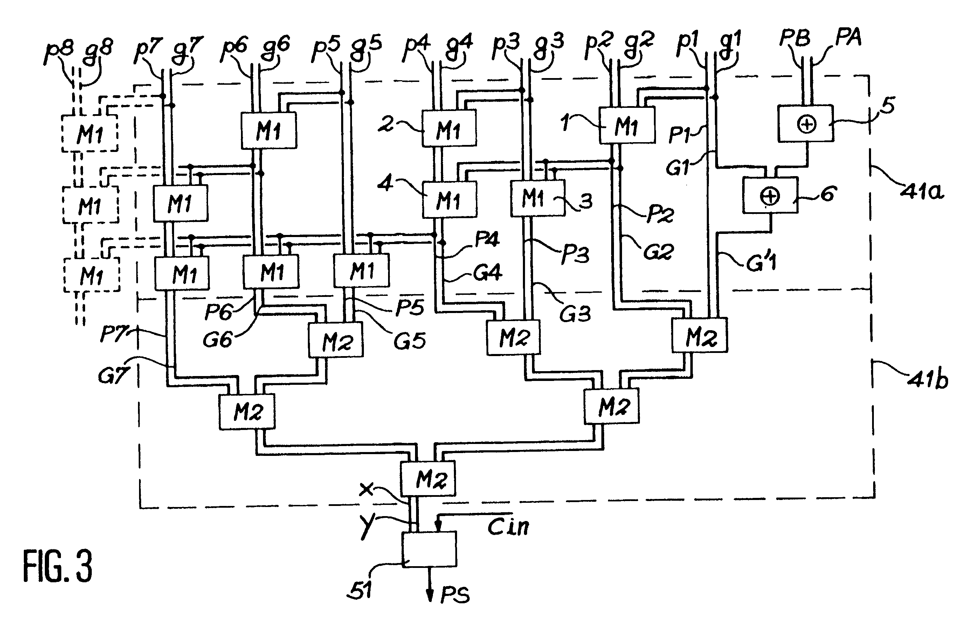

Ces dernières formules permettent de construire un circuit d'anticipation des retenues ayant un nombre réduit de circuits logiques branchés en cascade. La réalisation de ce circuit sera exposée en référence à la figure 3.

Concernant maintenant le problème des bits de parité, nous avons vu que les nombres sont généralement considérés comme formés par plusieurs groups de m bits de même taille et qu'à chaque groupe, on associe un bit de parité.

Ainsi les opérandes A et B, le mot de retenue C et la somme S sont par exemple constitués respectivement des groupes $A_1$, $A_2$, $A_3$, $A_4$, des groupes $B_1$, $B_2$, $B_3$, $B_4$, des groupes $C_1$, $C_2$, $C_3$, $C_4$ et des groupes $S_1$, $S_2$, $S_3$, $S_4$. A chaque groupe, par exemple $A_j$, on associe un bit de parité correspondant, par exemple $PA_j$.

Dans la suite de l'exposé, en ce qui concerne les bits de parité, nous considérerons uniquement les groupes homologues des opérandes, du mot de retenue et de la somme, c'est-à-dire les groupes constitués des bits de même poids. De plus, pour simplifier l'écriture, les indices identifiant les groupes ne seront plus utilisés. Enfin, l'indice i d'un bit sera le poids relatif au groupe considéré et aura donc une valeur comprise entre 1 et m, le poids 1 étant le poids le plus faible dans le groupe.

Si nous désignons par PA, PB, PS les bits de parité associés respectivement aux groupes A, B et S, il est facile de démontrer que l'on a la relation :

$PS = PA \oplus PB \oplus PC$

$\text{avec } PC = c_m \oplus ... \oplus c_i \oplus ... \oplus c_2 \oplus c_1$

PC est donc le bit de parité du groupe formé par les bits de retenue intervenant lors de l'addition. Il apparaît donc que pour obtenir PC selon la formule précédente, on doit disposer de toutes les retenues.

Or des calculs théoriques montrent que PC peut se mettre sous la forme :

$PC = Y \oplus c_{in} \cdot X^*$

où $c_{in}$ est égal à $c_1$, c'est-à-dire est la retenue de plus faible poids du groupe et où $X^*$ est le complément de X, avec :

$Y = G_1 \oplus G_2 \oplus ... \oplus G_i \oplus ... \oplus G_{m-1}$

$X = P_1 \oplus P_2 \oplus ... \oplus P_i \oplus ... \oplus P_{m-1}$

et où $P_i$ et $G_i$ vérifient les formules de récurrence suivantes :

$$P_i = p_i \cdot P_{i-1} \qquad \text{avec } P_1 = p_1$$
$$G_i = g_i + p_i \cdot G_{i-1} \qquad G_1 = g_1$$

Bien entendu, pour le groupe constitué par les bits de plus faible poids du mot, nous avons $c_{in} = 0$ lorqu'une addition normale est effectuée.

Nous allons décrire maintenant comment l'exploitation des formules précédentes permet d'atteindre le but recherché.

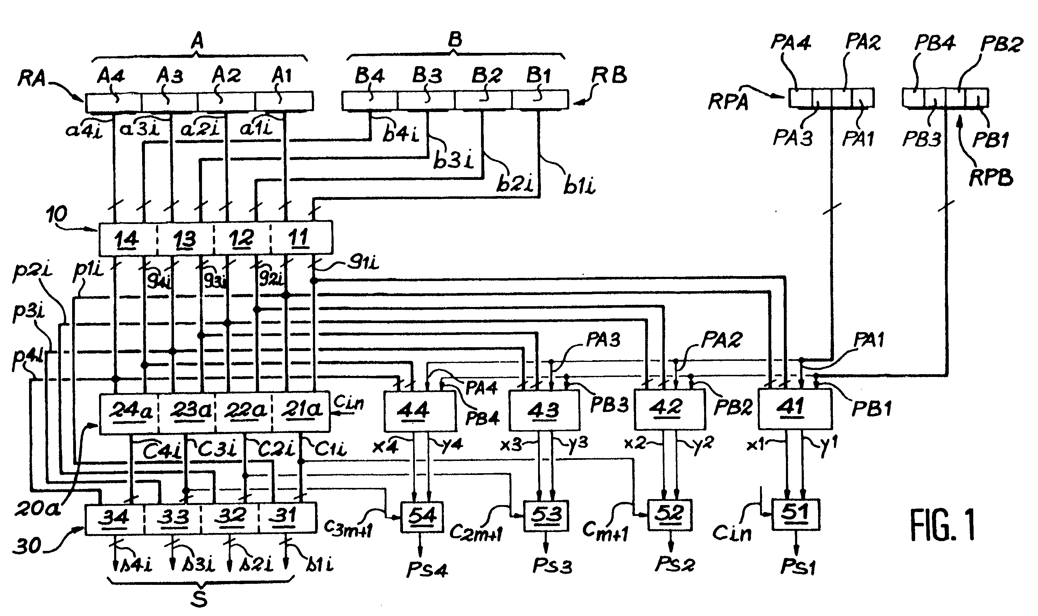

La figure 1 représente un additionneur associé à un générateur de bits de parité selon l'invention.

Pour illustrer l'invention, nous avons supposé que les nombres à additionner A et B sont constitués de quatre groupes de bits, respectivement A1, A2, A3, A4 et B1, B2, B3, B4. Chaque groupe est associé à un bit de parité correspondant. Par exemple le groupe A1 est associé au bit de parité PA1, le groupe A2 est associé au bit de parité PA2, etc.

Les opérandes A et B ainsi que les bits de parité associés à ces deux opérandes sont contenus dans des registres respectifs RA, RB, RPA et RPB.

Nous allons maintenant considérer deux groupes homologues extraits des opérandes, par exemple A1 et B1. Le groupe A1 est constitué de m bits $a_{1i}$ et le goupe B1 est constitué de m bits $b_{1i}$. Les bits de mêmes poids $a_{1i}$ et $b_{1i}$ sont combinés dans un opérateur 11 comprenant des circuits "OU EXCLUSIF" et des circuits "ET" de façon à calculer les variables :

$P_{1i} = a_{1i} \oplus b_{1i}$

$g_{1i} = a_{1i} \cdot b_{1i}$

Les circuits 12, 13 et 14 associés aux autres groupes sont identiques au circuit 11, l'ensemble de ces circuits formant le premier étage 10 de l'additionneur.

Un circuit d'anticipation des retenues 20a reçoit en entrée les sorties du premier étage 10. Le circuit 20a connu en soi permet de calculer toutes les retenues $c_{1i}$, $c_{2i}$, $c_{3i}$, et $c_{4i}$ intervenant dans l'addition des deux opérandes. Ce circuit 20a peut être considéré comme constitué de plusieurs circuits 21a, 22a, 23a et 24a associés respectivement aux groupes dont sont formés les opérandes.

Un dernier étage 30 constitué de "OU EXCLUSIF" reçoit les retenues du circuit 20a et les variables $p_{1i}$ à $p_{4i}$ issues du premier étage 10. Le circuit 30 délivre en sortie les bits $s_{1i}$ à $s_{4i}$ du résultat S de l'addition. Le circuit 30 peut aussi être considéré comme constitué des circuits 31, 32, 33 et 34 associés respectivement aux groupes formant les opérandes. Ainsi, le circuit 31 délivre les bits $s_{1i}$ du premier groupe vérifiant l'équation :

$s_{1i} = p_{1i} \oplus c_{1i}$

Ce qui précède concerne exclusivement l'additionneur et nous allons maintenant décrire la partie du circuit qui concerne le générateur de bits de parité.

Dans l'exemple représenté, nous avons supposé que les opérandes A et B et leurs sommes S étaient constitués de quatre groupes m bits et qu'à chacun des groupes, est associé un bit de parité correspondant.

Ainsi, le générateur de parité comprend un ensemble constitué de quatre opérateurs 41, 42, 43 et 44 recevant respectivement les bits de parité des groupes homologues des opérandes et les variables issues du premier étage 10.

Par exemple, l'opérateur 41 associé au premier groupe reçoit les parités PA1, PB1 et les variables $p_{11}$ et $g_{11}$ issues du circuit 11. En fonction de ces signaux, l'opérateur 41 délivre les deux variables X1 et Y1 vérifiant les équations qui ont été exposées précédemment mais en l'absence d'indice.

De façon analogue, les circuits 42, 43, 44 délivrent respectivement les variables X2, Y2 ; X3, Y3 ; X4, Y4.

Un dernier étage constitué des opérateurs 51, 52, 53 et 54 reçoit les variables X, Y du groupe correspondant ainsi qu'un signal de retenue dépendant du groupe considéré. Plus précisémment, l'opérateur 54 reçoit la retenue $c_{3m+1}$ issue du circuit 23a et qui est la retenue de plus faible poids du quatrième groupe. L'opérateur 53 reçoit la retenue $c_{2m+1}$ qui est la retenue de plus faible poids du troisième groupe, et l'opérateur 52 reçoit la retenue $c_{m+1}$ qui est la retenue de plus faible poids du second groupe. Dans le cas d'une addition normale, l'opérateur 51 reçoit la retenue $c_1 = 0$.

D'une façon générale, en désignant par $c_{in}$ la retenue appliquée à l'opérateur correspondant, chaque opérateur délivre un signal de sortie PS1 ... PS4 vérifiant :

$$PS = Y \oplus c_{in} \cdot X^*$$

Les variables PS1 à PS4 ainsi obtenues sont donc les bits de parité associés à chacun des groupes extraits de la somme.

Il est évident que le dispositif précédent pourrait être généralisé pour un nombre quelconque de groupes et un nombre quelconque de bits par groupe.

Les étages 10 et 30 de l'additionneur sont constitués de circuits logiques classiques du type "ET" et "OU EXCLUSIF". Leur réalisation est à la portée de l'homme du métier et ne sera donc par décrite en détail.

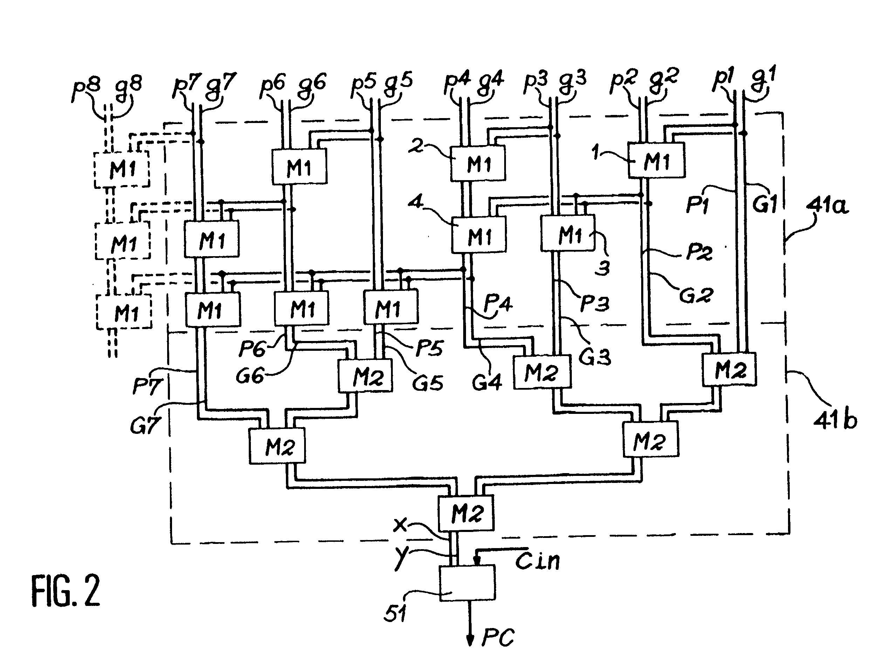

Les opérateurs 41 à 44 ainsi que le circuit d'anticipation des retenues 20a méritent par contre un développement qui sera maintenant exposé en référence aux figures 2 à 8.

Etant donné que les opérateurs 41 à 44 sont identiques, il suffira donc d'en décrire un, par exemple l'opérateur 41.

Par ailleurs, nous avons vu dans l'introduction que la difficulté résidait dans le calcul de la parité associé aux bits de retenue du groupe considéré. Aussi, nous allons d'abord décrire en référence à la figure 2 un dispositif permettant le calcul de ce bit de parité. Nous exposerons ensuite en référence à la figure 3 comment modifier ce circuit pour le transformer en générateur de bit de parité de la somme.

La figure 2 représente un circuit permettant le calcul du bit de parité associé aux bits de retenue d'un groupe de huit bits. Toutefois, il est clair que la description qui va suivre ne se limite pas à ce cas particulier et nous montrerons comment généraliser les circuits pour un nombre quelconque de bits.

Le circuit de la figure 2 comprend un premier opérateur 41a recevant les variables $p_1$, $g_1$ à $p_7$, $g_7$ calculées par le circuit 11 exposé précédemment ou par un circuit séparé mais identique. Ce circuit 11 peut en effet être commun avec l'additionneur mais si l'on veut améliorer l'intégrité du circuit, il est préférable d'utiliser un circuit 11 indépendant de l'additionneur car l'utilisation d'un circuit 11 commun masquerait les erreurs qui pourraient se produire dans ce circuit.

L'opérateur 41a est constitué exclusivement de modules logiques d'un premier type $M_1$ recevant en entrée quatre variables binaires $P_x$, $G_x$, $P_y$, $G_y$ et fournissant deux variables binaires de sortie $P_z$, $G_z$ vérifiant les équations :

$$P_z = P_y \cdot P_x$$
$$G_z = G_y + P_y \cdot G_x$$

L'utilisation de ces modules et leur disposition vont permettre de calculer les variables $P_i$ et $G_i$, pour i compris entre 1 et 7 défini par les relations de récurrence :

$$P_i = p_i \cdot P_{i-1} \qquad \text{avec } P_1 = p_1$$
$$G_i = g_i + p_i \cdot G_{i-1} \qquad G_1 = g_1$$

La relation qui lie le couple de variables de sortie $P_z$, $G_z$ aux deux couples de variables d'entrée $P_x$, $G_x$ et $P_y$, $G_y$ possède l'importante propriété d'être associative. Grâce à cette propriété, il est possible de disposer les modules $M_1$ de façon à calculer les variables $P_i$ et $G_i$ tout en réduisant au maximum le nombre de couches de ce circuit, c'est-à-dire le nombre de ces modules mis en cascade.

Nous allons maintenant indiquer la façon de construire le premier opérateur 41a en procédant par récurrence, l'indice i indiquant à la fois le poids du bit considéré et un rang correspondant de l'opérateur.

Pour i = 1, on obtient directement $P_1 = p_1$ et $G_1 = g_1$. Pour i compris entre 1 et 2, on combine en outre

$p_1$, $g_1$ avec $p_2$, $g_2$ dans un premier module 1 qui fournit en sortie $P_2$, $G_2$. Pour i = 3, un troisième module 3 combine $p_3$, $g_3$ avec $P_2$, $G_2$ issus du premier module 1. Ce module 3 fournit $P_3$, $G_3$. Pour i = 4, un autre module 2 combine $p_3$, $g_3$ et $p_4$, $g_4$ et la sortie de ce module 2 est combinée dans un autre module 4 avec la sortie du module 1. Ce module 4 fournit $P_4$, $G_4$. On obtient bien ce résultat grâce à l'associativité de la fonction réalisée par le module M1.

Pour compléter la construction de l'opérateur 41a pour i supérieur à 4, il suffit de suivre la méthode suivante :

le montage initial pour i compris entre 1 et $2^n$ étant réalisé, le montage pour i compris entre $2^n + 1$ et $2^{n+1}$ est obtenu en ajoutant des modules $M_1$ disposés selon ce montage initial mais décalés de $2^n$ rangs vers les poids forts, fournissant ainsi de nouvelles sorties. On dispose ensuite $2^n$ modules $M_1$ supplémentaires qui combinent les sorties de plus fort poids $P_2n$, $G_2n$ issues du montage initial et, respectivement, chacune de ces nouvelles sorties.

Bien entendu, la construction s'arrêtera à l'ordre m − 1. On disposera alors de toutes les valeurs des variables $P_i$ et $G_i$. Dans l'exemple considéré, nous disposons donc en sortie du premier opérateur 41a des variables $P_i$, $G_i$ jusqu'à l'ordre 7.

Les sorties $P_i$, $G_i$ de l'opérateur 41a sont ensuite appliquées aux entrées du second opérateur 41b.

L'opérateur 41b est composé de modules logiques d'un deuxième type $M_2$ qui sont simplement des circuits "OU EXCLUSIF" doubles à quatre entrées $X_x$, $Y_x$, $X_y$, $Y_y$ et fournissant deux sorties $X_z$, $Y_z$, vérifiant :

$$X_z = X_x \oplus X_y$$
$$Y_z = Y_x \oplus Y_y$$

On voit immédiatement qu'il suffit de disposer ces modules $M_2$ selon une construction en pyramide qui est équivalente à un opérateur "OU EXCLUSIF" à entrées multiples. Ce montage permettra donc d'obtenir les deux variables X et Y définies par les relations :

$$Y = G_1 \oplus G_2 \oplus ... \oplus G_i \oplus ... \oplus G_{m-1}$$
$$X = P_1 \oplus P_2 \oplus ... \oplus P_i \oplus ... \oplus P_{m-1}$$

Les variables X, Y et la retenue $c_{in}$ définie précédemment sont appliquées au troisième opérateur 51 dont la sortie PC est liée aux entrées par l'équation logique :

$$PC = Y \oplus c_{in} \cdot X^*$$

où $c_{in}$ (ici $c_{in} = c_1$) est la retenue de plus faible poids du groupe et où $X^*$ est le complément de X.

En pratique m est toujours une puissance de 2 et peut s'écrire $m = 2^n$. Dans ce cas, on démontre facilement que le nombre de couches nécessaires pour obtenir les variables $P_i$, $G_i$ est égal à n. Le nombre de couches de circuits nécessaires pour obtenir X et Y est égal à 2n et par conséquent le nombre total de couches pour obtenir la parité PC est égal à 2n + 1. Ainsi dans le cas où m = 8, le générateur de parité est constitué d'un circuit à sept couches.

Pour réaliser un circuit capable de calculer le bit de parité associé à l'un des groupes extrait de la somme, le circuit précédent doit être modifié de façon à faire intervenir les bits de parité associés aux groupes extraits des opérandes.

Comme on a la relation :

$$PS = PA \oplus PB \oplus PC$$

avec $PC = c_m \oplus ... \oplus c_i \oplus ... \oplus c_2 \oplus c_1$

et compte tenu de la commutativité et de l'associativité de l'opération "OU EXCLUSIF", on voit qu'il suffit d'introduire les bits de parité PA et PB dans l'expression de Y. En ce qui concerne la réalisation pratique, on peut par exemple utiliser des "OU EXCLUSIF" de façon à remplacer l'une quelconque des sorties $G_i$ du premier opérateur par l'expression $PA \oplus PB \oplus G_i$. Une autre solution pourrait consister à remplacer deux sorties quelconques $G_i$ et $G_j$ du premier opérateur par, respectivement, le résultat des opérations $PA \oplus G_i$ et $PB \oplus G_j$.

La figure 3 monte un exemple de modification du schéma de la figure 2 permettant d'obtenir ce résultat.

Selon cette réalisation, les bits de parité PA et PB des groupes extraits des opérandes sont combinés dans un "OU EXCLUSIF" 5 dont la sortie est combinée dans un autre "OU EXCLUSIF" 6 avec la variable $G_1$, la sortie du deuxième "OU EXCLUSIF" 6 délivrant en sortie la variable $G'_1 = PA \oplus PB \oplus G_1$.

Sans rien changer d'autre au circuit, la sortie de l'opérateur 51 représente maintenant le bit de parité PS de la somme pour le groupe considéré.

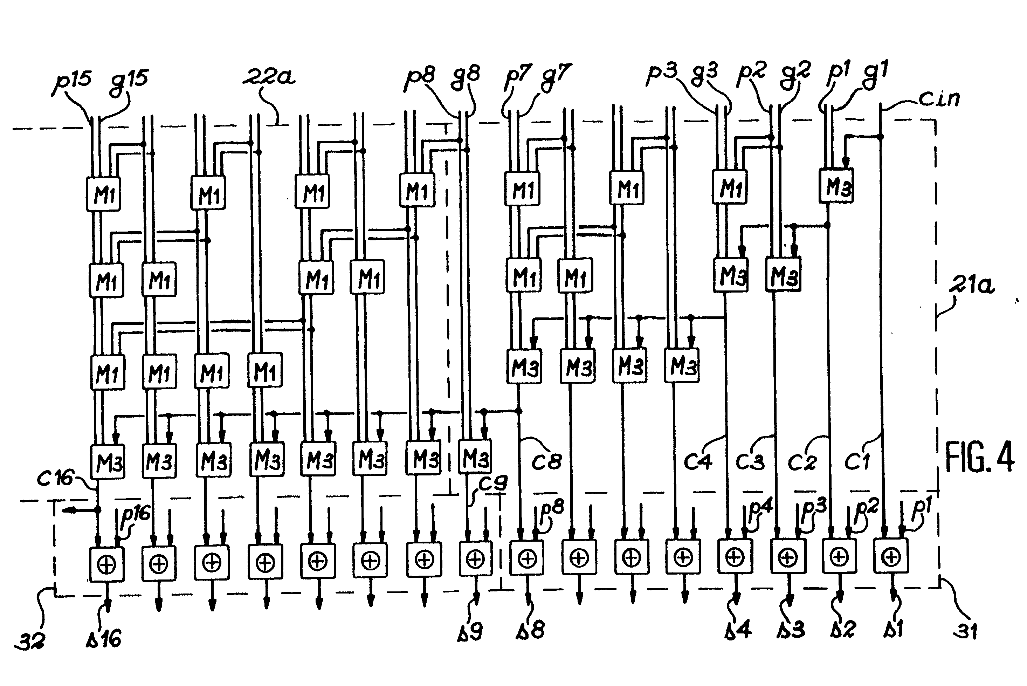

La figure 4 représente une parite d'un mode de réalisation d'un additionneur comprenant le circuit d'anticipation 20a des bits de retenue. Bien que ce circuit en soi ne soit pas l'objet de la présente invention, sa description est utile car elle permettra de mieux comprendre le contexte de l'invention.

Le circuit d'anticipation des bits de retenue du premier groupe 21a reçoit en entrée la variable $c_{in}$ et les sorties du premier étage 10.

$c_{in}$ correspond au bit de poids faible $c_1$ du mot de retenue. Pour une addition normale, on a $c_{in} = 0$.

Cependant, l'additionneur peut être utilisé pour effectuer des soustractions. En effet, l'opération de sous-

7

tration A − B revient à calculer A + B* + 1, B* étant le complément de B.

Pour cela, on peut utiliser l'additionneur avec A et B* comme opérandes et avec $c_{in}$ = 1. De même le dispositif de calcul des bits de retenue pourra être utilisé à condition également d'introduire $c_{in}$ = 1 dans le circuit 51 du premier groupe.

Le circuit de la figure 4 est construit en application de la formule :

$c_{i+1} = G_i + P_i \cdot c_q$.

Ce circuit comprend une pluralité de modules $M_1$ définis précédemment et destinés à calculer les variables $P_i$ et $G_i$. Le circuit comprend également des modules d'un troisième type $M_3$ à trois entrées $P_x$, $G_x$, $c_y$ et à une sortie $c_z$ vérifiant la relation :

$c_z = G_x + P_x \cdot c_y$

Les modules de type $M_1$ et $M_3$ sont disposés selon un montage appelé "recurrence solver" connu dans la technique des additionneurs.

Ce circuit fournit en sortie les retenues $c_i$ qui sont ensuite combinées dans le circuit 31 avec les variables $p_i$ de même poids.

Le circuit 31 délivre les bits $s_i$ du résultat de l'addition.

L'additionneur comprend également les circuits 22a et 32 pour le second groupe et d'autres circuits non représentés pour les groupes suivants.

Ainsi, les retenus intervenant dans les générateurs de parité décrits aux figures 2 et 3 peuvent être extraites de ce circuit d'anticipation des retenues appartenant à l'additionneur. Cependant, en procédant de cette façon, les erreurs portant sur les bits de retenues utilisés dans le générateur de parité seraient totalement masquées. Pour cette raison, il est préférable de prévoir un circuit indépendant pour calculer ces bits de parité.

Un tel circuit pourrait être identique à celui utilisé dans l'additionneur, mais il est intéressant de le simplifier de façon à ce qu'il fournisse que les bits de retenue intervenant dans la génération des bits de parité.

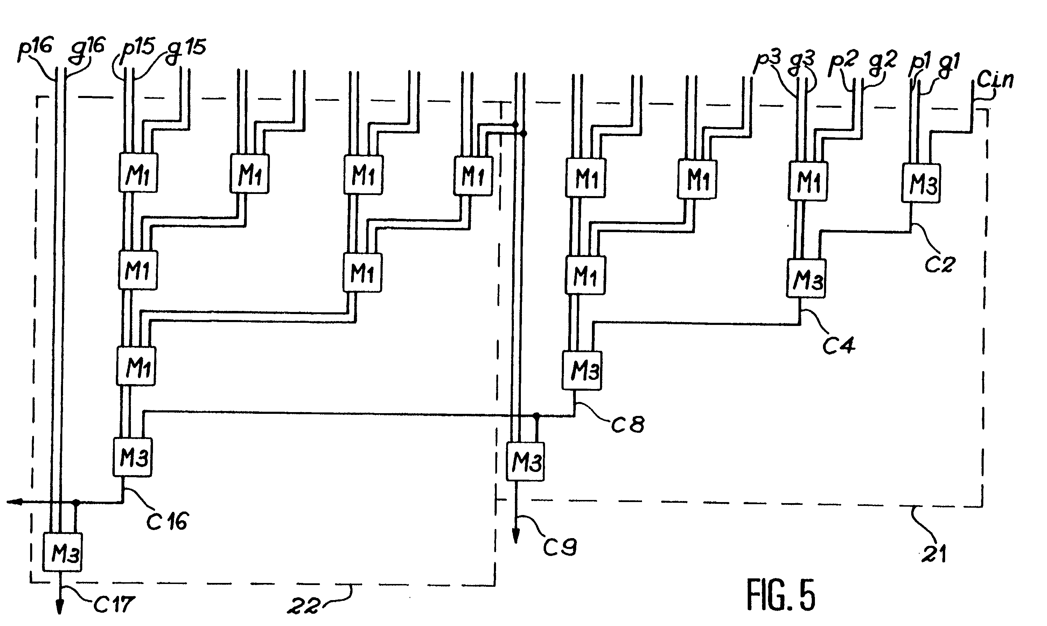

La figure 5 représente un tel circuit d'anticipation des retenues spécifique du générateur de parité. Ce circuit représente le cas où les groupes sur lesquels portent les parités comprennent huit bits. Un premier sous-ensemble 21 fournit la retenue $c_9$ qui servira de signal d'entrée au circuit 52 du deuxième groupe. Le circuit 22 fournit la retenue $c_{17}$ servant d'entrée au circuit 53 du troisième groupe. Enfin le circuit 23 non représenté fournira la retenue $c_{25}$ pour le quatrième groupe.

Bien entendu, l'adaptation de ce circuit dans le cas où les groupes sont en nombre et de longueur quelconques est à la portée de l'homme du métier.

Il est intéressant de noter que si les nombres à additionner comprennent N bits, où N est une puissance de 2, soit $N = 2^r$, le circuit d'anticipation des retenues comprendra r couches. Il en résulte que l'additionneur comprendra au total r + 1 couches. Ce résultat est à rapprocher des 2n + 1 couches nécessaires pour réaliser le générateur de parité. Il conviendra donc de choisir n en fonction de r.

Si par exemple on a N = 64 et m = 8, on obtiendra exactement le même nombre de couches pour l'additionneur et pour le générateur de parité. Toutefois, cela ne veut pas dire que ces deux circuits seront exactement aussi rapide. En effet, les modules logiques intervenant dans l'additionneur et dans le générateur de parité ne sont pas identiques. En particulier, au niveau de la dernière couche, l'opérateur 51 effectue une opération plus complexe que les "OU EXCLUSIF" de la dernière couche 31 de l'additionneur. Il en résulte que si le générateur de parité utilise les retenues en provenance de l'additionneur, les bits de parité pourraient être obtenus légèrement plus tard que le résultat de l'addition. Cependant, si l'on utilise un générateur de retenues indépendant des circuits de l'additionneur, ce handicap est compensé. En effet, en comparant les circuits représentés aux figures 4 et 5, on constate par exemple que l'un des modules $M_3$ de l'avant dernier étage du circuit 21a alimente une pluralité de modules $M_3$ alors que dans le circuit de la figure 5, cela n'est pas le cas. Il en résulte une différence des capacités d'entrée de cet étage qui a pour conséquence que le circuit de la figure 5 sera plus rapide que celui de la figure 4. Ainsi, la complexité relative du générateur de parité sera largement compensé par la simplification du circuit d'anticipation des retenues.

Nous allons maintenant donner des indications en vue de réaliser le générateur de parité selon l'invention en technologie CMOS.

Nous avons vu que les modules $M_1$ réalisaient des fonctions :

$P_z = P_y \cdot P_x$

$G_z = G_y + P_y \cdot G_x$

Cependant, en technologie CMOS, il est plus facile d'obtenir les fonctions complémentaires et leur fonction duale.

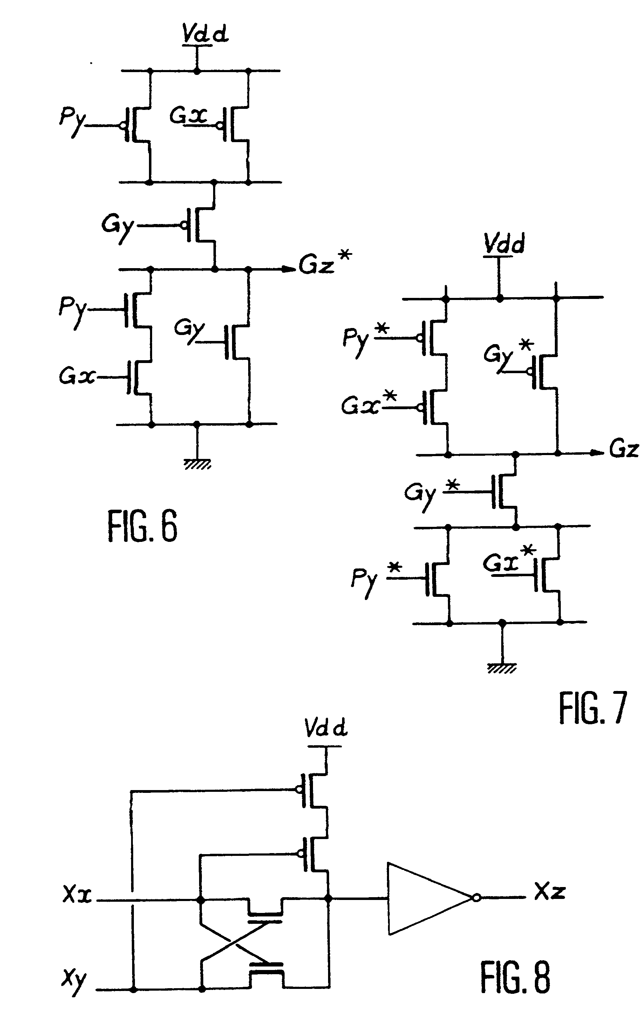

La figure 6 représente un circuit CMOS permettant d'obtenir la variable $G_z^*$ qui est le complément de $G_z$. Ce circuit peut alors être associé à une porte NON-ET (NAND) fournissant $P_z^*$ qui est le complément de $P_z$.

La figure 7 présente un circuit permettant d'obtenir la fonction duale de la précédente. Ainsi, $G_x^*$, $G_y^*$, $P_y^*$ étant respectivement les compléments de $G_x$, $G_y$, $P_y$, le circuit de la figure 7 délivre $G_z$ vérifiant l'équation :

$G_z = G_y + P_y \cdot G_x$

Le circuit de la figure 7, pourra être associé à une porte NI (NOR). Par conséquent, on pourra réaliser les circuits des figures 2 et 3 en utilisant à la place des modules $M_1$ définis précédemment, alternativement ces circuits sans changer le résultat final, à condition de prévoir des inverseurs aux entrées appropriées.

Ces circuits peuvent aussi être utilisés pour réaliser les modules $M_3$ du circuit d'anticipation des retenues.

Il est inutile de détailler davantage la méthode pour effectuer le montage de ces circuits car elle est tout à fait à la portée de l'homme du métier.

La figure 8 représente à titre d'illustration un exemple de circuit CMOS pour réaliser la fonction "OU EXCLUSIF". Ce circuit pourra être utilisé par exemple pour réaliser les des modules $M_2$ et 51 des figures 2 et 3.

## Revendications

1. Dispositif de calcul du bit de parité (PC) associé à au moins un groupe de m bits consécutifs extraits du mot de retenue (C) apparaissant lors de l'addition de deux nombres binaires (A, B), lesdits nombres (A, B) comprenant chacun au moins un groupe de m bits, lesdits groupes appartenant respectivement auxdits nombres (A, B) et au mot de retenue (C) étant constitués de bits respectivement de même poids, lesdits groupes extraits desdits nombres (A, B) étant formés respectivement des bits $a_m$, ..., $a_i$, ..., $a_2$, $a_1$, et des bits $b_m$, ..., $b_i$, ..., $b_2$, $b_1$, l'indice i indiquant le poids dans le groupe du bit associé $(a_i, b_i)$, ledit dispositif étant caractérisé en ce qu'il comprend :

— un premier étage (11) pour calculer pour tout i compris entre 1 et m − 1 les valeurs :

$p_i = a_i \oplus b_i$

$g_i = a_i \cdot b_i$

$\oplus$ désignant l'opération "OU EXCLUSIF",

— un premier opérateur (41a) pour calculer pour tout i compris entre 2 et m

— 1 les valeurs $P_i$ et les valeurs $G_i$ vérifiant les équations logiques récurrentes suivantes :

$$P_i = p_i \cdot P_{i-1} \qquad \text{avec } P_1 = p_1$$
$$G_i = g_i + p_i \cdot G_{i-1} \qquad G_1 = g_1$$

— un deuxième opérateur (41b) pour calculer :

$Y = G_1 \oplus G_2 \oplus ... \oplus G_i \oplus ... \oplus G_{m-1}$

$X = P_1 \oplus P_2 \oplus ... \oplus P_i \oplus ... \oplus P_{m-1}$

— et un troisième opérateur (51) pour calculer :

$PC = Y \oplus c_{in} \cdot X^*$

où $c_{in}$ est la retenue de plus faible poids du groupe et où $X^*$ est le complément de X.

2. Dispositif selon la revendication 1, caractérisé en ce que la retenue $(c_{in})$ est calculée par un circuit distinct de l'additionneur (10, 20a, 30) associé audit dispositif.

3. Dispositif selon l'une des revendications précédentes, caractérisé en ce que le premier étage (10) est commun avec l'additionneur (10, 20a, 30) associé audit dispositif.

4. Dispositif selon l'une des revendications précédentes, caractérisé en ce que ledit premier opérateur (41a) est constitué de modules logiques d'un premier type $(M_1)$ opérant sur quatre entrées $P_x$, $G_x$, $P_y$, $G_y$ et fournissant deux sorties $P_z$, $G_z$ liées aux entrées par les équations suivantes :

$P_z = P_y \cdot P_x$

$G_z = G_y + P_y \cdot G_x$

lesdits modules étant montés conformément à la méthode récurrente suivante, où le poids i indique un rang correspondant de l'opérateur :

a) pour i compris entre 1 et 2, un premier module (1) opère sur p1, g1, et p2 et g2 et fournit P2, G2 ;

b) pour i compris entre 3 et 4, un deuxième module (2) opère sur p3, g3 et p4, g4, un troisième module (3) opère sur P2, G2 et p3, g3 et fournit P3, G3, un quatrième module (4) opère sur P2, G2 et les sorties du deuxième module (2) et fournit P4, G4 ;

c) le montage initial pour i compris entre 1 et $2^n$ étant réalisé, le montage pour i compris entre $2^n + 1$ et $2^{n+1}$ est obtenu en ajoutant des modules $(M_1)$ disposés selon ledit montage initial mais décalés de $2^n$ rangs vers les poids forts, fournissant ainsi de nouvelles sorties, $2^n$ modules du premier type $(M_1)$ supplémentaires étant disposés pour opérer sur les sorties du plus fort poids $(P_{2^n}, G_{2^n})$ issues dudit montage initial et, respectivement, chacunes desdites nouvelles sorties.

5. Dispositif selon la revendication 4, caractérisé en ce que ledit deuxième opérateur (41b) est constitué de modules logiques d'un deuxième type ($M_2$) à quatre entrées $X_x$, $Y_x$, $X_y$, $Y_y$ et fournissant deux sorties $X_z$, $Y_z$ liées aux entrées par les équations suivantes :

$X_z = X_x \oplus X_y$

$Y_z = Y_x \oplus Y_z$

lesdits modules logiques du deuxième type ($M_2$) étant disposés en pyramide dont la base reçoit en entrée les sorties $P_i$, $G_i$ du premier opérateur (41, 42, 43, 44) prises deux à deux autant que possible et disposées de façon à calculer :

$Y = G_1 \oplus G_2 \oplus ... \oplus G_i \oplus ... \oplus G_{m-1}$

$X = P_1 \oplus P_2 \oplus ... \oplus P_i \oplus ... \oplus P_{m-1}$

6. Dispositif selon l'une des revendications précédentes caractérisé en ce que pour calculer le bit de parité (PS) associé à au moins un groupe de n bits extraits de la somme (S) de deux nombres binaires (A, B) des circuits supplémentaires "OU EXCLUSIF" (5, 6) sont ajoutés pour introduire les parités PA et PB desdits groupes extraits desdits nombres (A, B) et disposés de façon à :

— soit remplacer l'une quelconque des sorties $G_i$ du premier opérateur (41a) par le résultat de l'opération $PA \oplus PB \oplus G_i$ réalisée grâce auxdits circuits supplémentaires (5, 6),

— soit remplacer deux sorties quelconques $G_i$ et $G_j$ du premier opérateur (41a) par, respectivement, le résultat des opérations $PA \oplus G_i$ et $PB \oplus G_j$.

7. Dispositif selon la revendication 6, caractérisé en ce que lesdits circuits "OU EXCLUSIF" supplémentaires (5, 6) sont disposés de façon à ce que le nombre maximal de modules du premier type ($M_1$) et de "OU EXCLUSIF" mis en cascade ne soit pas augmenté par l'insertion desdits "OU EXCLUSIF" supplémentaires (5, 6).

## Patentansprüche

1. Vorrichtung zum Berechnen des Paritätsbits (PC), das wenigstens einer Gruppe von m aufeinanderfolgenden Bits, die aus einem bei der Addition zweier Binärzahlen (A, B) auftretenden Übertragswort (C) entnommen werden, wobei die Zahlen (A, B) jeweils wenigstens eine Gruppe von m Bits aufweisen, wobei die Gruppen entsprechend den Zahlen (A, B) und dem aus den entsprechenden Bits mit gleicher Wertigkeit bestehenden Übertragswort (C) zugehören, wobei die den Zahlen (A, B) entnommenen Gruppen aus Bits $a_m$, ..., $a_i$, ..., $a_2$, $a_1$ bzw. aus Bits $b_m$..., $b_i$..., $b_2$, $b_1$ gebildet werden, wobei der i die Wertigkeit der Gruppe, dem das Bit ($a_i$, $b_i$) zugehört, angibt, wobei die Vorrichtung dadurch gekennzeichnet ist, daß sie umfaßt :

— eine erste Stufe (11) zum Berechnen der Werte

$p_i = a_i + b_i$

$g_i = a_i \cdot b_i$

für sämtliche i zwischen 1 und m − 1, wobei $\oplus$ die "EXKLUSIV-ODER"-Operation bezeichnet,

— einen ersten Operator (41a) zum Berechnen der Werte $P_i$ und der Werte $G_i$, die die folgenden logischen Rekursionsgleichungen erfüllen, für sämtliche i zwischen 2 und m − 1 :

$P_i = p_i \cdot P_{i-1}$, mit $P_1 = p_1$

$G_i = g_i + P_i \cdot G_{i-1}$, mit $G_1 = g_1$,

— einen zweiten Operator (41b) zum Berechnen von

$Y = G_1 \oplus G_2 \oplus ... \oplus G_i \oplus ... \oplus G_{m-1}$

$X = P_1 \oplus P_2 \oplus ... \oplus P_i \oplus ... \oplus P_{m-1}$

— und einen dritten Operator (51) zum Berechnen von

$PC = Y \oplus c_{in} \cdot X^*$

wobei $c_{in}$ der Übertrag mit kleinster Wertigkeit der Gruppe ist und $X^*$ das Komplement von X ist.

2. Vorrichtung gemäß Anspruch 1, dadurch gekennzeichnet, daß der Übertrag ($c_{in}$) von einer Schaltung berechnet wird, die von der der Vorrichtung zugehörigen Additionseinrichtung (10, 20a, 30) verschieden ist.

3. Vorrichtung gemäß einem der vorangehenden Ansprüche, dadurch gekennzeichnet, daß die erste Stufe (10) der der Vorrichtung zugeordneten Additionseinrichtung (10, 20a, 30) zugehört.

4. Vorrichtung gemäß einem der vorangehenden Ansprüche, dadurch gekennzeichnet, daß der erste Operator (41a) von Logikmodulen eines ersten Typs ($M_1$) gebildet wird, die mit vier Eingaben $P_x$, $G_x$, $P_y$, $G_y$ operiert und zwei Ausgaben $P_z$, $G_z$ liefert, die mit den Eingaben über die folgenden Gleichungen verbunden sind :

$P_z = P_y \cdot P_x$

$G_z = G_y + P_y \cdot G_x$

wobei die Module in Übereinstimmung mit dem folgenden Rekursionsverfahren angeordnet sind und wobei die Wertigkeit i einen dem Operator entsprechenden Rang angibt :

a) für i zwischen 1 und 2 operiert ein erster Modul (1) mit $p_1$, $g_1$ und $p_2$ und $g_2$ und liefert $P_2$, $G_2$ ;

b) für i zwischen 3 und 4 operiert ein zweiter Modul (2) mit $p_3$, $g_3$ und $p_4$, $g_4$, operiert ein dritter Modul (3) mit $P_2$, $G_2$, und $p_3$, $g_3$ und liefert $P_3$, $G_3$, operiert ein vierter Modul (4) mit $P_2$, $G_2$ und mit den Ausgaben des zweiten Moduls (2) und liefert $P_4$, $G_4$ ;

c) wobei die anfängliche Anordnung für i zwischen 1 und $2^n$ verwirklicht wird, wobei die Anordnung für i zwischen $2^n + 1$ und $2^{n+1}$ dadurch erhalten wird, daß Module ($M_1$), die gemäß der anfänglichen Anordnung angeordnet sind, hinzugefügt werden, jedoch um $2^n$ Ränge in Richtung größerer Wertigkeit verschoben sind und auf diese Weise neue Ausgaben liefern, wobei $2^n$ zusätzliche Module des ersten Typs ($M_1$) angeordnet sind, um mit den Ausgaben der größten Wertigkeit ($P_{2n}$, $G_{2n}$), die sich aus der anfänglichen Anordnung und entsprechend aus jeder der neuen Ausgaben ergeben, zu operieren.

5. Vorrichtung gemäß Anspruch 4, dadurch gekennzeichnet, daß der zweite Operator (41b) von Logikmodulen eines zweiten Typs ($M_2$) mit vier Eingaben $X_x$, $Y_x$, $X_y$, $Y_y$, der zwei Ausgaben $X_z$, $Y_z$ liefert, die mit den Eingaben über die folgenden Gleichungen verbunden sind :

$X_z = X_x \oplus X_y$

$Y_z = Y_x \oplus Y_z$

wobei die Logikmodule des zweiten Typs ($M_2$) in einer Pyramide angeordnet sind, deren Basis als Eingabe die Ausgaben $P_i$, $G_i$ des ersten Operators (41, 42, 43, 44) empfängt, die soweit wie möglich paarweise aufgenommen und so angeordnet werden, daß

$Y = G_1 \oplus G_2 \oplus ... \oplus G_i \oplus ... \oplus G_{m-1}$

$X = P_1 \oplus P_2 \oplus ... \oplus P_i \oplus ... \oplus P_{m-1}$

berechnet werden kann.

6. Vorrichtung gemäß einem der vorangehenden Ansprüche, dadurch gekennzeichnet, daß zur Berechnung des Paritätsbits (PS), das wenigstens einer Gruppe von der Summe (S) zweier Binärzahlen (A, B) entnommenen m Bits zugeordnet ist, zusätzliche "EXKLUSIV-ODER"-Schaltungen (5, 6) hinzugefügt werden, um die Paritäten PA und PB der den Zahlen (A, B) entnommenen Gruppen einzuführen, und die so angeordnet sind, daß

— entweder eine der Ausgaben Gi des ersten Operators (41a) durch das Ergebnis der Operation PA $\oplus$ PB $\oplus$ $G_i$, die mittels der zusätzlichen Schaltungen (5, 6) ausgeführt wird, ersetzt wird,

— oder irgendwelche zwei Ausgaben $G_i$ und $G_j$ des ersten Operators (41a) durch die Operationsergebnisse PA $\oplus$ $G_i$ bzw. PB $\oplus$ $G_j$ ersetzt werden.

7. Vorrichtung gemäß Anspruch 6, dadurch gekennzeichnet, daß die zusätzlichen "EXKLUSIV-ODER"-Schaltungen (5, 6) so angeordnet sind, daß die maximale Anzahl der Module des ersten Typs ($M_1$) und der "EXKLUSIV-ODER"-Schaltungen, die kaskadenförmig geschaltet sind, durch die Einbringung der zusätzlichen "EXKLUSIV-ODER"-Schaltungen (5, 6) nicht erhöht wird.

**Claims**

1. A system for calculating the parity bit (PC) associated with at least one group of m consecutive bits extracted from the carry word (C) appearing at the time of the addition of two binary numbers (A, B), said numbers (A, B) each including at least one group of m bits, said groups belonging respectively to said numbers (A, B) and to the carry word (C) comprising respective bits of the same significance, said groups extracted from said numbers (A, B) being formed respectively by bits $a_m$, ..., $a_i$, ..., $a_2$, $a_1$ and bits $b_m$, ...,$b_i$, ...., $b_2$, $b_1$, the subscript i indicating the significance in the group of the associated bit ($a_i$, $b_i$), said system being characterized in that it comprises :

— a first stage (11) for calculating, for every i included between 1 and m − 1, the values :

$p_i = a_i \oplus b_i$

$g_i = a_i \cdot b_i$

$\oplus$ indicating the "EXCLUSIVE OR" operation,

— a first operator (41a) for calculating, the every i included between 2 and m − 1, the values $P_i$ and the values $G_i$ verifying the following recurring logic equations :

$$P_i = p_i \cdot P_{i-1} \qquad \text{with } P_1 = p_1$$

$$G_i = g_i + p_i \cdot G_{i-1} \qquad G_1 = g_1$$

EP 0 329 545 B1

— a second operator (41b) for calculating :

$$Y = G \oplus G_2 \oplus \ldots \oplus G_i \oplus \ldots \oplus G_{m-1}$$
$$X = P_1 \oplus P_2 \oplus \ldots \oplus P_i \oplus \ldots \oplus P_{m-1}$$

— and a third operator (51) for calculating :

$$PC = Y \oplus c_{in} \cdot X^*$$

— where $C_{in}$ is the least significant carry bit of the group, and where $X^*$ is the complement of X.

2. A system according to claim 1, characterized in that the carry bit ($C_{in}$) is calculated by a circuit separate from the adder (10, 20a, 30) associated with said system.

3. A system according to one of the preceding claims, characterized in that the first stage (10) is shared with the adder (10, 20a, 30) associated with said system.

4. A system according to one of the preceding claims, characterized in that said first operator (41a) comprises logic modules of a first type ($M_1$) operating upon four inputs $P_x$, $G_x$, $P_Y$, $G_Y$ and furnishing two outputs $P_z$, $G_z$ connected to the inputs by the following equations :

$$P_z = P_y \cdot P_x$$
$$G_z = G_y + P_y \cdot G_x$$

said modules being assembled in accordance with the following recurrent method, where the significance (i) indicates a corresponding rank of the operator :

(a) for i included between 1 and 2, a first module (1) operates upon p1, g1 and p2 and g2 and furnishes P2, G2 ;

(b) for i included between 3 and 4, a second module (2) operates upon p3, g3 and p4, g4, a third module (3) operates upon P2, G2 and p3, g3 and furnishes P3, G3, a fourth module (4) operates upon P2, G2 and the outputs of the second module (2) and furnishes P4, G4 ;

(c) once the initial assembly for i included between 1 and $2^n$ has been performed, the assembly for i included between $2^n + 1$ and $2^{n+1}$ is obtained by adding the modules (M1) disposed in accordance with said initial assembly but offset by $2^n$ ranks toward the major significance, thus furnishing new outputs, $2^n$ supplementary modules of the first type (M1) being disposed to operate upon the most significant outputs ($P_2n$, $G_2n$) issued by said initial assembly and, respectively, each of said new outputs.

5. A system according to claim 4, characterized in that said second operator (41b) comprises logic modules of a second type (M2) with four inputs $X_x$, $Y_x$, $X_y$, $Y_y$ and furnishing two outputs $X_z$, $Y_z$ connected to the inputs by the following equations :

$$X_z = X_x \oplus X_y$$
$$Y_z = Y_x \oplus Y_z$$

said logic modules of the second type (M2) being disposed in a pyramid, the base of which at its input receives the outputs $P_i$, $G_i$ of the first operator (41, 42, 43, 44) taken two by two as much as possible, and disposed in such a manner as to calculate :

$$Y = G_1 \oplus G_2 \oplus \ldots \oplus G_i \oplus \ldots \oplus G_{m-1}$$
$$X = P_1 \oplus P_2 \oplus \ldots \oplus P_i \oplus \ldots \oplus P_{m-1}$$

6. A system according to one of the preceding claims characterized in that, to calculate the parity bit (PS) associated with at least one group of m bits extracted from the sum (S) of two binary numbers (A, B), supplementary "EXCLUSIVE OR" circuits (5, 6) are added for introducing the parity bits PA and PB of said group extracted from said numbers (A, B) and disposed in such a manner as to :

— either replace any one of the outputs $G_i$ of the first operator (41a) with the result of the operation PA $\oplus$ PB $\oplus$ $G_i$ performed with the aid of said supplementary circuits (5, 6) ;

— or to replace any two outputs $G_i$ and $G_j$ of the first operator (41a) with the result of the operations PA $\oplus$ $G_i$ and PB $\oplus$ $G_j$, respectively.

7. A system according to claim 6, characterized in that said supplementary "EXCLUSIVE OR" circuits (5, 6) are disposed in such a manner that the maximum number of modules of the first type (M1) and of the "EXCLUSIVE OR" type connected in cascade are not increased by the insertion of said supplementary "EXCLUSIVE OR" circuits (5, 6).

FIG. 1

EP 0 329 545 B1

FIG. 2

EP 0 329 545 B1

FIG. 3

FIG. 4

FIG. 5

EP 0 329 545 B1

FIG. 6

FIG. 7

FIG. 8